# EUROPÄISCHE PATENTANMELDUNG

(11) **EP 4 086 999 A1**
(43) Veröffentlichungstag der Anmeldung: **09.11.2022**
(21) Anmeldenummer: 22170797.9
(22) Anmeldetag: 29.04.2022
(51) Int. Cl.: H01M 10/04, H01M 10/617, H01M 10/653, H01M 10/6554, H01M 50/204, H01M 50/289, H01M 50/291, H01M 50/293

(54) **BATTERIEMODUL**

(30) Priorität: 03.05.2021 DE 102021204435
(71) Anmelder: Robert Bosch GmbH, 70442 Stuttgart (DE)
(72) Erfinder: Hauser, Fabian, 74245 Loewenstein (DE)

(57) **Zusammenfassung**

Die Erfindung betrifft ein Batteriemodul mit einer Mehrzahl an Batteriezellen (2), welche in einem Gehäuse (3) des Batteriemoduls (1) aufgenommen sind, wobei zwischen der Mehrzahl an Batteriezellen (2) und dem Gehäuse (3) ein Dämpferelement (4) angeordnet ist, wobei das Dämpferelement (4) eine Umhüllung (6) aufweist, welche ein elastisch ausgebildetes Elastomer (5) des Dämpferelements (4) umschließt, dadurch gekennzeichnet, dass die Umhüllung (6) zumindest eine Schicht (7) aus Graphit, Aluminium und/oder Kupfer umfasst.

## Beschreibung

### Stand der Technik

Die Erfindung geht aus von einem Batteriemodul mit einer Mehrzahl an Batteriezellen.

Aus dem Stand der Technik ist es bekannt, dass Batteriemodule aus einer Mehrzahl an einzelnen Batteriezellen bestehen können, welche seriell und/oder parallel elektrisch leitend miteinander verschaltet sein können, so dass die einzelnen Batteriezellen zu dem Batteriemodul zusammengeschaltet sind.

Weiterhin werden solche Batteriemodule zu Batterien bzw. Batteriesystemen zusammengeschaltet.

Stand der Technik sind beispielsweise DE 10 2011 015 152 A1 oder US 2014/356 685.

### Offenbarung der Erfindung

Ein Batteriemodul mit den Merkmalen des unabhängigen Anspruchs bietet den Vorteil, dass eine verbesserte Wärmeverteilung innerhalb des Batteriemoduls zur Verfügung gestellt werden kann.

Dazu wird erfindungsgemäß ein Batteriemodul mit einer Mehrzahl an Batteriezellen zur Verfügung gestellt. Die Batteriezellen sind dabei in einem Gehäuse des Batteriemoduls aufgenommen. Dabei ist zwischen den Batteriezellen und dem Gehäuse ein Dämpferelement angeordnet. Weiterhin weist dieses Dämpferelement eine Umhüllung auf, welche ein elastisch ausgebildetes Elastomer des Dämpferelements umschließt. Dabei umfasst die Umhüllung zumindest eine Schicht aus Graphit, Aluminium und/oder Kupfer.

Durch die in den abhängigen Ansprüchen aufgeführten Maßnahmen sind vorteilhafte Weiterbildungen und Verbesserungen der im unabhängigen Anspruch angegebenen Vorrichtung möglich.

Insbesondere durch das Dämpferelement, welches elastisch ausgebildet ist, also in seiner Form anpassbar ist bzw. in seiner Form flexibel ist, und welches insbesondere dadurch auch zum Schutz vor auf das Batteriemodul einwirkenden Kräften dient, kann die Wärmeverteilung innerhalb des Batteriemoduls verbessert werden. Insbesondere kann die Wärmeleitung innerhalb des Batteriemoduls verbessert werden. Somit können insgesamt durch eine verbesserte Wärmeabfuhr sogenannte Hotspots von Wärme verhindert werden. Dabei können insbesondere durch die Umhüllung, welche zumindest eine Schicht aus Graphit, Aluminium und/oder Kupfer umfasst, die Wärmeleiteigenschaften zur Verbesserung der Wärmeverteilung verbessert werden.

Beispielsweise weist Graphit eine Wärmeleitfähigkeit von 400 bis 1000 Watt pro Meter und Kelvin (W/(mK)) auf.

Die zumindest eine Schicht aus Graphit, Aluminium und/oder Kupfer kann dabei beispielsweise als Graphitfolie, Aluminiumfolie bzw. Kupferfolie ausgebildet sein.

Bevorzugt umfasst die Umhüllung zumindest eine elektrisch isolierende Schicht. Bevorzugt kann die zumindest eine elektrisch isolierende Schicht Teflon umfassen. Dies erhöht zuverlässig die Sicherheit des Batteriemoduls bspw. gegenüber elektrischen Kurzschlüssen.

Von Vorteil ist es, wenn die Umhüllung benachbart zu dem Gehäuse des Batteriemoduls eine äußerste Schicht mit einem Reibungskoeffizienten bzw. einer Reibungszahl kleiner als 0, 1 aufweist. Dadurch kann das Batteriemodul auf einfache Weise in dem Gehäuse aufgenommen werden. Insbesondere kann somit das Batteriemodul während einer Montage zuverlässig entlang des Gehäuses gleiten.

Besonders bevorzugt ist das Elastomer aus Polyurethan gebildet. Dadurch kann eine zuverlässige Elastizität ausgebildet werden.

Weiterhin bevorzugt kann das Batteriemodul zumindest ein thermisches Ausgleichselement umfassen, welches zwischen dem Dämpferelement und der Mehrzahl an Batteriezellen und/oder zwischen dem Dämpferelement und dem Gehäuse angeordnet ist. Insbesondere ist das zumindest eine thermische Ausgleichselement elektrisch isolierend ausgebildet und weiterhin insbesondere als sogenanntes Gappad ausgebildet. Dadurch kann Wärmeleitung weiter zuverlässig verbessert werden.

Es ist zweckmäßig, wenn das Dämpferelement zwischen Zellverbindern des Batteriemoduls und dem Gehäuse angeordnet ist. Die Zellverbinder verschalten dabei die Mehrzahl an Batteriezellen elektrisch seriell und/oder parallel miteinander.

Gemäß einem bevorzugten Aspekt der Erfindung ist das Elastomer als Strangpressprofil ausgebildet.

Weiterhin bevorzugt umfasst die Umhüllung benachbart zu der Mehrzahl an Batteriezellen des Batteriemoduls eine äußerste Schicht, welche als Klebeschicht ausgebildet ist. Bevorzugt ist die Klebeschicht dabei als Klebestreifen ausgebildet. Insbesondere ist die Klebeschicht elektrisch isolierend ausgebildet. Dadurch ist es möglich, die Mehrzahl an Batteriezellen zuverlässig an das Dämpferelement anzubinden.

Es ist zweckmäßig, wenn die Umhüllung das Elastomer in einer Längsrichtung des Elastomers vollständig umschließt. An dieser Stelle sei angemerkt, dass die Längsrichtung sich in Richtung einer größten Ausdehnung des Elastomers erstreckt.

Durch eine Ausbildung des Elastomers, welches insbesondere als Strangpressprofil ausgebildet ist, mit unterschiedlichen Geometrien, wie beispielsweise Höhen, Breiten oder Durchmessern, können unterschiedliche Spannkräfte bzw. Vorspannkräfte ausgebildet werden. Insbesondere ist es dadurch möglich, durch eine vergleichbar flache Ausbildung des Strangpressprofils, also mit einer geringeren Höhe, den Abstand zwischen dem Gehäuse des Batteriemoduls und der Mehrzahl an Batteriezellen bzw. den Zellverbindern zu verkürzen. Das Elastomer kann insgesamt insbesondere auch zu einer Abstützung der Mehrzahl an Batteriezellen gegenüber dem Gehäuse dienen.

### Kurze Beschreibung der Zeichnungen

Ausführungsbeispiele der Erfindung sind in den Zeichnungen dargestellt und in der nachfolgenden Beschreibung näher erläutert.

Es zeigt:
- Figur 1: ein Einführen einer Mehrzahl an Batteriezellen in ein Gehäuse,
- Figur 2: eine Mehrzahl an Batteriezellen,
- Figur 3: schematisch ein Dämpferelement und dessen Anordnung in einem erfindungsgemäßen Batteriemodul, und
- Figur 4: eine Ausführungsform eines Dämpferelements.

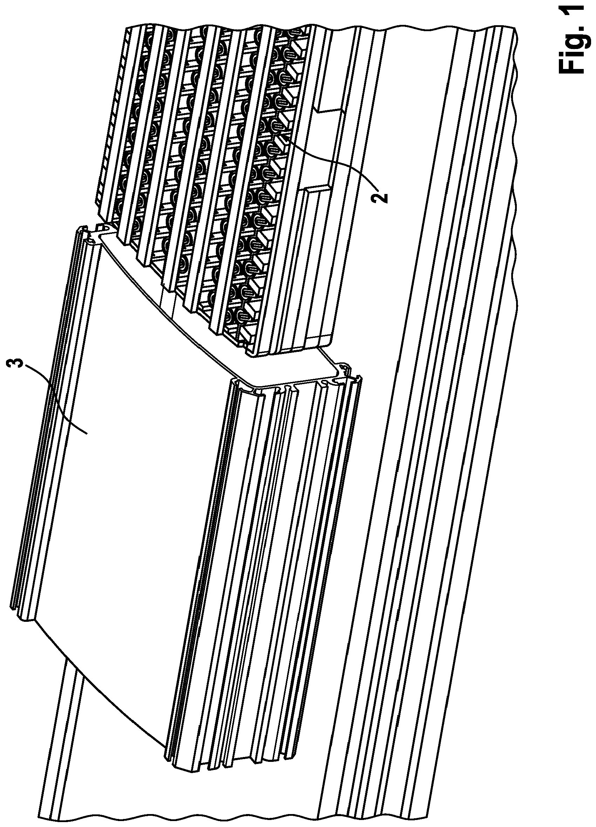

Figur 1 zeigt ein Einführen einer Mehrzahl an Batteriezellen 2 des Batteriemoduls 1 in ein Gehäuse 3 des Batteriemoduls 1. Dabei sei an dieser Stelle angemerkt, dass hierbei kein Dämpferelement 4 angeordnet ist.

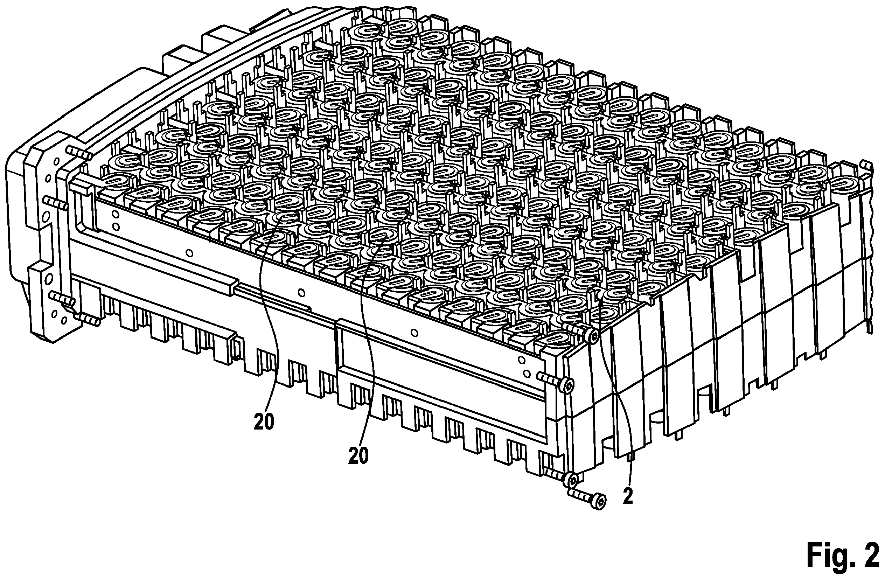

Figur 2 zeigt eine Mehrzahl an Batteriezellen 2 des Batteriemoduls 1.

Dabei sind auch Zellverbinder 20 des Batteriemoduls 1 zu erkennen, welche die Mehrzahl an Batteriezellen 2 elektrisch seriell und/oder parallel miteinander verschaltet.

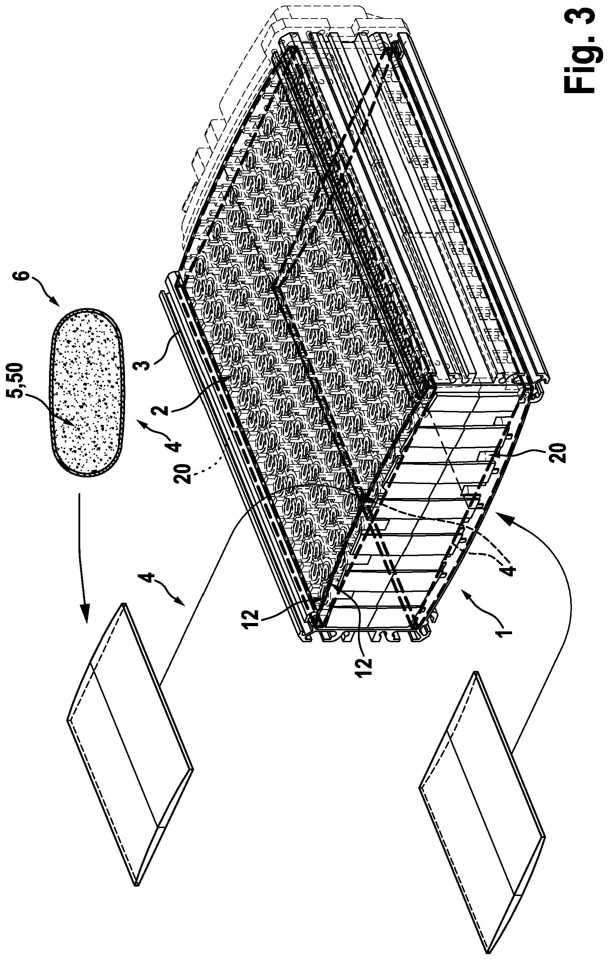

Figur 3 zeigt schematisch ein Dämpferelement 4 und dessen Anordnung in einem Batteriemodul 1.

Dabei ist zu erkennen, dass das Dämpferelement 4 ein Elastomer 5 umfasst, welches elastisch ausgebildet ist. Besonders bevorzugt ist das Elastomer 5 aus einem Polyurethan 50 ausgebildet.

Weiterhin weist das Dämpferelement 4 eine Umhüllung 6 auf, die das Elastomer 5 umschließt.

Dabei wird das Dämpferelement 4 zwischen den Batteriezellen 2 des Batteriemoduls 1 und dem Gehäuse 3 des Batteriemoduls 1 angeordnet.

Insbesondere ist zu erkennen, dass das Batteriemodul 1 insgesamt zwei Dämpferelemente 4 umfasst. Ferner ist zu erkennen, dass das Dämpferelement 4 bzw. die Dämpferelement 4 zwischen Zellverbindern 20 des Batteriemoduls 1 und dem Gehäuse 3 angeordnet ist bzw. sind.

Weiterhin ist in der Figur 3 zu erkennen, dass die Batteriezellen 2 in dem Gehäuse 3 des Batteriemoduls 1 aufgenommen sind.

Weiterhin kann das Batteriemodul 1 thermische Ausgleichselemente 12 umfassen, welche bspw. zwischen dem Dämpferelement 4 und der Mehrzahl an Batteriezellen 2 und zwischen dem Dämpferelement 4 und dem Gehäuse 3 angeordnet sind.

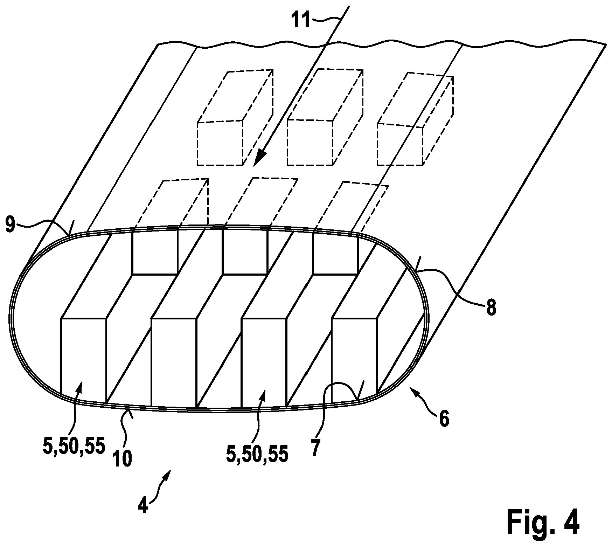

Die Figur 4 zeigt eine Ausführungsform eines Dämpferelements 4.

Zunächst ist zu erkennen, dass das Dämpferelement 4 das elastisch ausgebildete Elastomer 5 umfasst, welches bevorzugt aus Polyurethan 50 ausgebildet ist.

Das Elastomer 5 ist dabei als Strangpressprofil 55 ausgebildet. Insbesondere weist das Dämpferelement 6 eine Mehrzahl an Elastomeren 5, welche jeweils bevorzugt als Strangpressprofil 55 ausgebildet sein können, auf.

Weiterhin ist zu erkennen, dass das Dämpferelement 4 die Umhüllung 6 umfasst.

Die Umhüllung 6 umfasst zumindest eine Schicht 7 aus Graphit, Aluminium und/oder Kupfer.

Die Umhüllung 6 umfasst zudem eine elektrisch isolierende Schicht 8. Die elektrisch isolierende Schicht 8 kann beispielsweise Teflon umfassen.

An dieser Stelle sei angemerkt, dass die zumindest eine Schicht 7 beispielsweise innenliegend in der Umhüllung 6 angeordnet ist, also mit anderen Worten unmittelbar benachbart zu dem Elastomer 5 angeordnet ist, und dass die elektrisch isolierende Schicht 8 beispielsweise außenliegend angeordnet ist, also mit anderen Worten ausgedrückt unmittelbar benachbart zu dem Gehäuse 3 oder der Mehrzahl an Batteriezellen 2 angeordnet ist.

Weiterhin kann die Umhüllung 6 benachbart zu dem Gehäuse 3 des Batteriemoduls 1 eine äußerste Schicht 9 aufweisen, die einen Reibungskoeffizienten kleiner als 0, 1 aufweist. Dabei ist angemerkt, dass diese äußerste Schicht 9 zumindest teilweise an der elektrisch isolierenden Schicht 8 angeordnet sein kann oder auch anstelle der elektrisch isolierenden Schicht 8 angeordnet sein kann.

Ferner ist es auch möglich, dass die Umhüllung 6 benachbart zu der Mehrzahl an Batteriezellen 2 des Batteriemoduls 1 eine äußerste Schicht 10 aufweist, die als Klebeschicht ausgebildet ist. Dabei ist angemerkt, dass diese äußerste Schicht 10 zumindest teilweise an der elektrisch isolierenden Schicht 8 angeordnet sein kann oder auch anstelle der elektrisch isolierenden Schicht 8 angeordnet sein kann.

Weiterhin weist das Elastomer 5 bzw. weisen die Elastomere 5 eine Längsrichtung 11 auf, welche sich in Richtung der größten Ausdehnung des Elastomers 5 erstreckt. Dabei umschließt die Umhüllung 6 das Elastomer 5 bzw. die Elastomer 5 in der Längsrichtung 11 vollständig.

## Patentansprüche

1. Batteriemodul mit einer Mehrzahl an Batteriezellen (2), welche
in einem Gehäuse (3) des Batteriemoduls (1) aufgenommen sind, wobei zwischen der Mehrzahl an Batteriezellen (2) und dem Gehäuse (3)
ein Dämpferelement (4) angeordnet ist, wobei
das Dämpferelement (4) eine Umhüllung (6) aufweist, welche ein elastisch ausgebildetes Elastomer (5) des Dämpferelements (4) umschließt,
**dadurch gekennzeichnet, dass**
die Umhüllung (6) zumindest eine Schicht (7) aus Graphit, Aluminium und/oder Kupfer umfasst.

2. Batteriemodul nach dem vorhergehenden Anspruch 1,
**dadurch gekennzeichnet, dass**
die Umhüllung (6) weiterhin zumindest eine elektrisch isolierende Schicht (8) umfasst.

3. Batteriemodul nach dem vorhergehenden Anspruch 2,
**dadurch gekennzeichnet, dass**
die zumindest eine elektrisch isolierende Schicht (8) Teflon umfasst.

4. Batteriemodul nach einem der vorhergehenden Ansprüche 1 bis 3,
**dadurch gekennzeichnet, dass**
die Umhüllung (6) benachbart zu dem Gehäuse (3) des Batteriemoduls (1) eine äußerste Schicht (9) mit einem Reibungskoeffizienten kleiner als 0,1 aufweist.

5. Batteriemodul nach einem der vorhergehenden Ansprüche 1 bis 4,
**dadurch gekennzeichnet, dass**
das Elastomer (5) aus Polyurethan (50) ausgebildet ist.

6. Batteriemodul nach einem der vorhergehenden Ansprüche 1 bis 5,
**dadurch gekennzeichnet, dass**
das Batteriemodul (1) zumindest ein thermisches Ausgleichselement (12) umfasst, welches
zwischen dem Dämpferelement (4) und der Mehrzahl an Batteriezellen (2) und/oder
zwischen dem Dämpferelement (4) und dem Gehäuse (3) angeordnet ist.

7. Batteriemodul nach einem der vorhergehenden Ansprüche 1 bis 6,
**dadurch gekennzeichnet, dass**
das Dämpferelement (4) zwischen Zellverbindern (20) des Batteriemoduls (1), welche die Mehrzahl an Batteriezellen (2) elektrisch seriell und/oder parallel miteinander verschaltet und dem Gehäuse (3) angeordnet ist.

8. Batteriemodul nach einem der vorhergehenden Ansprüche 1 bis 7,
**dadurch gekennzeichnet, dass**
das Elastomer (5) als Strangpressprofil (55) ausgebildet ist.

9. Batteriemodul nach einem der vorhergehenden Ansprüche 1 bis 8,
die Umhüllung (6) benachbart zu der Mehrzahl an Batteriezellen (2) des Batteriemoduls (1) eine äußerste Schicht (10) ausgebildet als Klebeschicht umfasst.

10. Batteriemodul nach einem der vorhergehenden Ansprüche 1 bis 9,
**dadurch gekennzeichnet, dass**
die Umhüllung (6) das Elastomer (5) in einer Längsrichtung (11) des Elastomers (5) vollständig umschließt.
